Europäisches Patentamt

European Patent Office

Office européen des brevets

(11) Publication number: **0 035 410**
**B1**

(12) **EUROPEAN PATENT SPECIFICATION**

(45) Date of publication of patent specification: **08.08.84**    (51) Int. Cl.³: **G 03 G  15/22**

(21) Application number: **81300898.4**

(22) Date of filing: **04.03.81**

(54) Reader-printer and method of producing a permanent copy therein.

(30) Priority: **05.03.80 GB  8007496**
**05.03.80 GB  8007497**
**05.03.80 GB  8007498**
**05.03.80 GB  8007499**

(43) Date of publication of application:
**09.09.81 Bulletin 81/36**

(45) Publication of the grant of the patent:
**08.08.84 Bulletin 84/32**

(84) Designated Contracting States:
**CH DE FR GB LI SE**

(56) References cited:
**GB - A - 1 388 033**
**US - A - 3 083 869**
**US - A - 3 623 806**
**US - A - 3 630 606**
**US - A - 3 714 396**
**US - A - 3 899 248**
**US - A - 3 901 593**

(73) Proprietor: **IMAGING TECHNOLOGY LIMITED**
**27, Portland Road**
**London W.11 (GB)**

(72) Inventor: **James, Paul Monamy**
**27, Portland Road**
**London W.11 (GB)**

(74) Representative: **Newby, John Ross et al,**
**J.Y. & G.W. Johnson Furnival House 14/18 High**
**Holborn**
**London WC1V 6DE (GB)**

## Description

This invention relates to a microfilm reader-printer.

A microfilm reader-printer uses an image recorded on microfilm as an input and projects a magnified image of the film onto a screen for viewing by an observer.

When the observer wishes to obtain a permanent copy of an image which he has been viewing, he utilises the electrophotographic print facility provided in such devices so that a photoconductive surface of a copy sheet is uniformly charged in a charging station, is exposed to the image in an exposure station to produce variations of charge distribution on the surface, the surface then being contacted with toner particles, in a development station, which particles are preferentially attracted to the surface in dependence on the charge image formed thereon. A permanent copy is thus produced from the array of toner particles thereby formed on the photoconductive surface of the copy sheet in the development station.

A considerable number of alternative designs of reader-printers of this general type are currently available.

All the known designs of microfilm reader-printer use positive feed of the copy sheet through the charging, exposure and development stations.

Thus UK Application 1388033 uses a copy sheet cut from a roll which is fed by rollers through the charging station, onto an air permeable belt backed by a suction chest to be led to the exposure station and by pairs of rollers through the development station.

Similarly US Application 3899248 positively controls the advance of a sheet of copy paper cut from a roll throughout its movement through the respective stations and only releases the paper after it has left the exit of the development station.

We have now found that significant cost economies can be obtained by the expedient of releasing the copy sheet from its positive mechanical advance after its photoconductive surface has been charged so that it falls under gravity into the exposure station and from the exposure station to the inlet of the development station and then restoring the positive mechanical advance for the processing of the sheet in the development station.

According to one aspect of the present invention a reader-printer comprising a housing having a screen on which an image of a film is projected, and an electrophotographic print facility within the housing for producing a print on a copy sheet of an image projected on the screen when print facility comprises a charging station, an exposure station and a development station with the path for a copy sheet through the housing extending downwardly from the charging station to the exposure station and downwardly from the exposure station to an inlet of the development station and with first mechanical means for feeding a copy sheet from a copy sheet inlet of the housing through the charging station, and second mechanical means for feeding a copy sheet from said inlet of the development station through the development station, is characterised in that means is provided to allow a charged copy sheet to drop, under the influence of gravity, from the charging station into the exposure station prior to the formation of the charge image thereon, and from the exposure station to said inlet of the development station after such charge image formation.

The invention is particularly applicable to a reader-printer in which the screen is formed by a plane surface located within the housing and viewed through a transparent window of the housing. By inclining the screen at an angle suitable for viewing through the window (in practice an angle of 45° plus 25° or minus 10° is particularly convenient) it has been found that a copy sheet can be slid into the desired exposure position on the screen by feeding it from a charging station disposed above the screen and allowing the sheet to drop from exit rolls of the charging station into the desired exposure position on the screen.

Desirably the exposure position is defined by retractable edge stops which temporarily hold the charged copy sheet in position for the exposure and then release it for onward movement through the development station.

The reader-printer known from U.S. Application 3899248 and U.K. Application 1388033 both utilise some form of conveying means to positively feed the copy sheet into and out of the exposure station, such conveying means adding to the complexity of these devices.

A device in accordance with the present invention which releases a charged copy sheet for free fall through the exposure station of the print facility, can be of much simpler design than the known devices thus permitting the production of a more compact and less expensive unit.

It is desirable to locate a reservoir for copy sheets at the top of the device and this reservoir can be coupled to the charging station by an automatic sheet feed or, in the case of a device designed for only occasional use of the print facility, for manual feed of sheets from the reservoir into the inlet of the charging station.

Since conventional copy sheets are rectangular with ends which are shorter than the sides and it is sometimes more convenient to produce the image on the sheet with an end uppermost and on other occasions with a side uppermost, a reader-printer in accordance with the invention is desirably provided with a screen wide enough to receive the copy sheet with a side uppermost and to provide two sets of stop means on the screen, a lower stop means being effective if the copy sheet is fed through the charging station with an end thereof leading and a higher stop means effective if the copy sheet is fed through the charging station with a side thereof leading. Arranging the stop means in this way ensures that the device automatically arrests the downward movement of the copy sheet at the correct position on the screen.

To ensure that the copy sheet passes through the development station with its leading end normal to the direction of the movement of the sheet through the development station, it is desirable to provide an inlet nip for the development station which is defined between a pair of confronting rollers, to allow the copy sheet to drop against the upstream side of that nip when the stop means is withdrawn from the leading edge of the copy sheet after exposure has been effected in the exposure station, but to slightly delay the commencement of rotation of the confronting rollers by a time sufficient to ensure that the copy sheet has become stationary against the nip with its leading edge accurately aligned with the nip.

A particularly compact arrangement of device is achieved if the outlet of the development station is on the front of the device below the viewing window.

According to a further aspect of the present invention a method of producing a copy of an image in a microfilm reader-printer which comprises mechanically feeding a copy sheet through a charging station of the reader-printer to provide a uniform electrostatic charge on the copy sheet and issue the charged sheet out of the station, advancing the uniformly electrostatically charged copy sheet issuing from the charging station of the reader-printer prior to exposure therein, exposing said sheet to produce a charge image thereon, after exposure therein displacing said exposed sheet from said exposure position and feeding the exposed copy sheet with a charge image formed thereon from the exposure station to the inlet of a development station of the reader-printer and then mechanically feeding the exposed copy sheet through the development station to convert the charge image into a toner image is characterised in that the charged sheet is released to fall under gravity into the desired exposure position and subsequently released from the exposure position to fall again under gravity to the inlet of the development station.

Desirably the inlet to the development station is defined by the nip between a pair of rollers and the copy sheet dwells at the entrance to that nip, after its gravity feed thereto, prior to rotation of the rollers commencing to further advance the copy sheet through the development station.

Suitably the charging of the copy sheet is effected in a charging station, the inlet of which comprises a pair of rollers defining a nip therebetween, one of the rollers of that pair being manually rotatable to permit at least initial manual feed of the copy sheet into the charging station.

UK Patent Specification 1451709 discloses an electrophotographic camera (e.g. for a cathode ray tube) in which a sheet of copy paper can be dropped into an exposure station and then sequentially charged and exposed by a moving shutter arrangement which sweeps downwardly past the sheet. A development station is provided below the exposure station to receive a sheet as it leaves the exposure station.

One embodiment of reader-printer in accordance with the invention will now be described, by way of example, with reference to the accompanying drawings, in which:—

Figure 1 is a front view of the reader-printer,

Figure 2 is a schematic sectional view on the line II—II through Figure 1,

Figure 3 is a schematic view of the exposure station of the device shown in Figure 1 and Figure 2,

Figure 4 is an enlarged view of the development station of the device of Figures 1 and 2, and

Figure 5 is a sequencing diagram illustrating the manner in which the device of Figures 1 and 2 is operated in practice.

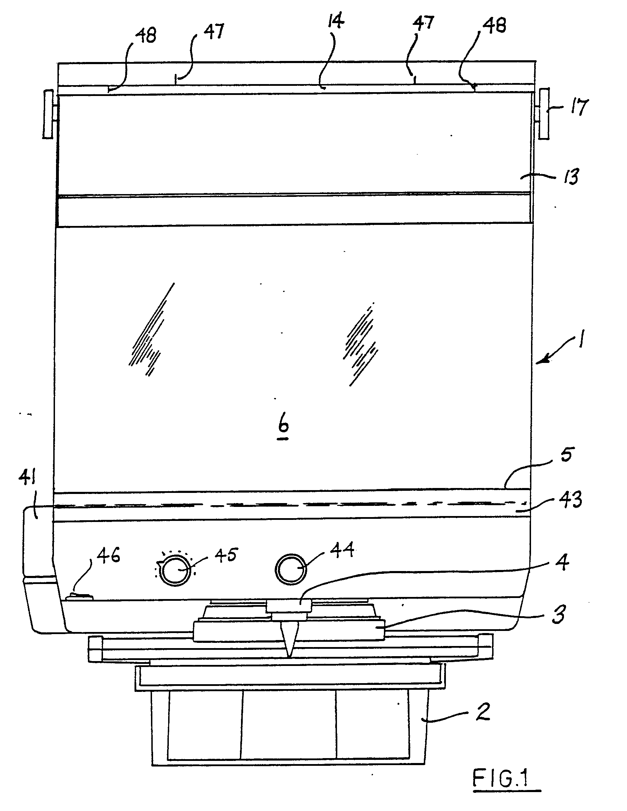

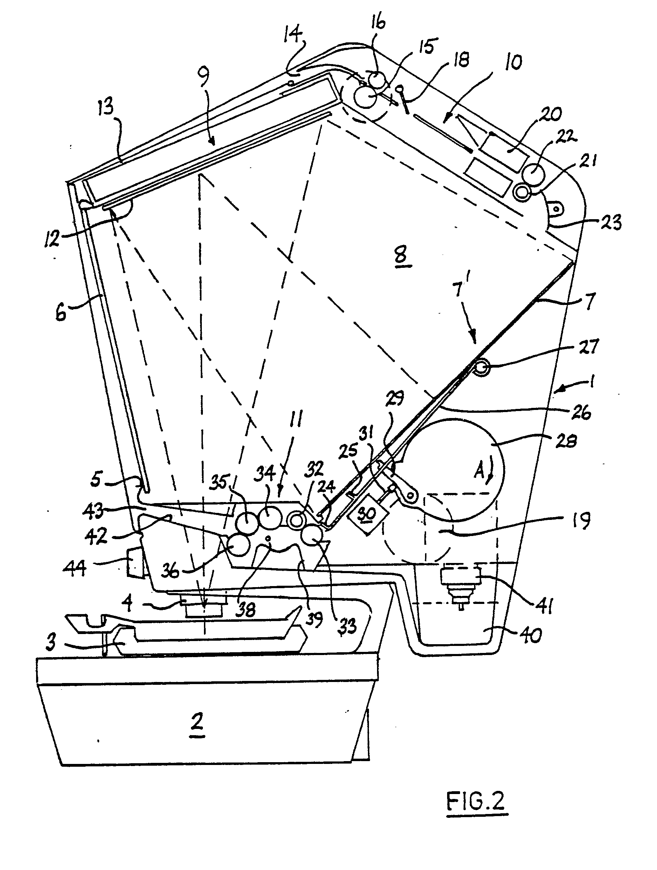

Referring first to Figures 1 and 2 the device illustrated comprises a housing generally designated 1 which is mounted on a lamp box 2. Between the housing 1 and the lamp box 2 a conventional microfiche carrier 3 is located, this carrier being movable in conventional manner to locate any one of the images on a microfiche mounted in the carrier, over the optical axis of a light beam projected up from the box 2 into the housing 1 through a lens system 4. The lamp box 2, carrier 3 and lens system 4 are of conventional design and will not be further described.

The front face of the housing 1 consists essentially of a viewing window 5 which is covered with a sheet of transparent coloured plastics material 6, the colour of the material being selected having regard to the sensitivity range of the photoconductive material used on the copy sheets in a manner as will be described hereafter. The window 5 gives an observer seated outside the housing a clear view of an inclined screen 7 located at the far side of a generally pentagonally shaped viewing space 8. The material 6 of the window 5 and the screen 7 constitute two sides of this space 8, the remaining three sides serving as a reservoir 9 for copy sheets, a charging station 10 and a development station 11. Adjacent the reservoir 9 is a plane reflecting mirror 12 which reflects the image of the microfiche onto the screen 7. The screen 7 defines an exposure station generally designated 7'.

When used as a reader, the observer views the selected microfiche through the window 5 and the coloured sheet of material 6, the image appearing on the screen 7 which is inclined at 45° to the horizontal, a convenient angle at which to view the image. Other angles between 70° and 35° to the horizontal appear to be usable.

When the observer wishes to take a permanent copy of a particular image, he can lift a hinged top flap 13 on the upper surface of the housing 1, remove a copy sheet from the reservoir and insert this into an inlet slit 14 above the reservoir 9 until the leading edge of the sheet comes to rest against the nip of a pair of inlet rollers 15 and 16. One of these inlet rollers (15 in the drawing) terminates in a knob 17 exposed to one side of the housing and rotation of the knob will feed the copy sheet between the rollers 15 and 16 further into the charging station 10.

Just downstream of the inlet rollers 15 and 16 is a pivoted finger 18 which is displaced by the leading edge of the fed-in copy sheet, deflection of this finger from its normal rest position actuating a main drive motor 19 (shown schematically in Figure 2) which powers the various components of the device in the manner hereinafter to be described. When the motor 19 is operating, the rollers 15 and 16 are powered therefrom so that further movement of the copy sheet through the device is effected automatically once the finger 18 has been deflected by the leading edge of the manually fed-in sheet.

Downstream of the finger 18 is a corona charging station 20 and downstream of that, a further pair of feed rollers 21 and 22.

The copy sheet is of zinc oxide coated paper and is fed into the slit 14 with its coated surface facing downwards so that it is the downward-facing surface leaving the corona unit 20 which is charged with the uniform electrostatic charge. Thus it is feed roller 21 which contacts the uniformly charged surface of the copy sheet and this roller is made of suitable electrically insulating material to prevent disturbance of the charged surface by its contact therewith. An arcuate deflector plate 23 downsteam of the feed rollers 21 and 22 encourages the leading end of the fed sheet to turn downwardly and, as the feed rollers 21 and 22 advance the sheet, lower the charged sheet down past the inclined screen 7.

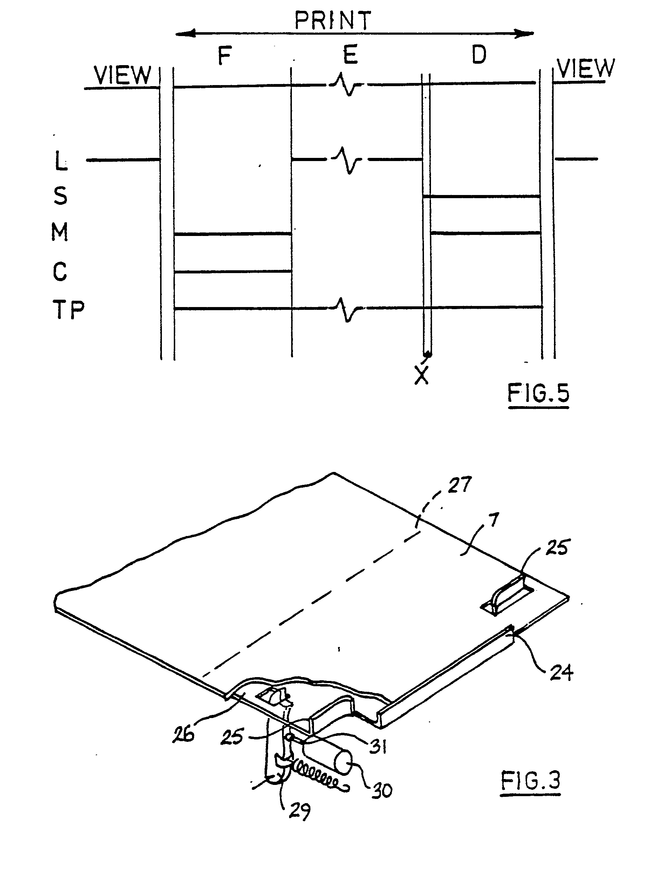

Adjacent the bottom edge of the screen 7, two sets of stop means are provided, the lower of these being a first projecting edge 24 and the upper, a pair of bent-up edges 25. From Figure 3 it can be seen that the ledges 25 are spaced apart sufficiently to permit the leading edge of a copy sheet lowered over the screen 7 with its shorter end leading to pass between the edges 25 so that the leading end is brought to rest against the edge 24. If, however, the copy sheet had been fed into the slit 14 with the longer side of the sheet leading, it would be the outer edge portions of this longer side when engaged the spaced-apart edges 25 thus bringing the copy sheet to rest at a somewhat higher position on the screen 7 than in the case where it was the shorter end of the sheet which was the leading end.

The spacing between the lower and upper stop means is equal to one half the difference between the length and the width of the size of copy sheet for which the printer has been designed to operate (i.e. a distance of

$$\frac{297 - 210}{2} = 43.5 \text{ mm}$$

in the case of A4 paper).

The inner extremities of the spaced-apart edges 25 projecting through the screen 7 are curved downwardly to ensure that if a copy sheet, in its fall over the screen 7, moves slightly off line, the curved portions of the edges 25 will deflect it back between the edges 25 so that it comes to rest against the lower edge 24.

The edges 24 and 25 are formed on a flap member 26 which is hinged below the screen 7 on the line 27. A cam member 28, rotatable in the direction of the arrow A during operation of the motor 19, bears against the underside of the flap member 26 during an initial part of its rotation, pushing the latter up into contact with the underside of the screen 7 and thereby causing the edges 24 and 25 to project beyond the upper face of the screen 7. As the flap member 26 moves into this upper position, a pivoted finger 29 locks it into this upper position. Once the finger is locked in place, the flap member 26 is no longer held in its upper position by the cam member 28 so that when the cam surface retracts from the underside of the flap member it remains in the upper position held there by the finger 29. Release of the flap member 26 is effected by means of a solenoid 30 actuating a plunger 31, the plunger bearing against the finger 29. When electrical energy is supplied to the solenoid 30 at the appropriate moment in the processing cycle (as will hereinafter be described), the plunger 31 moves the finger 29 out of its recess in the flap member 26, releasing the latter and allowing it to fall back into the position illustrated in Figure 2.

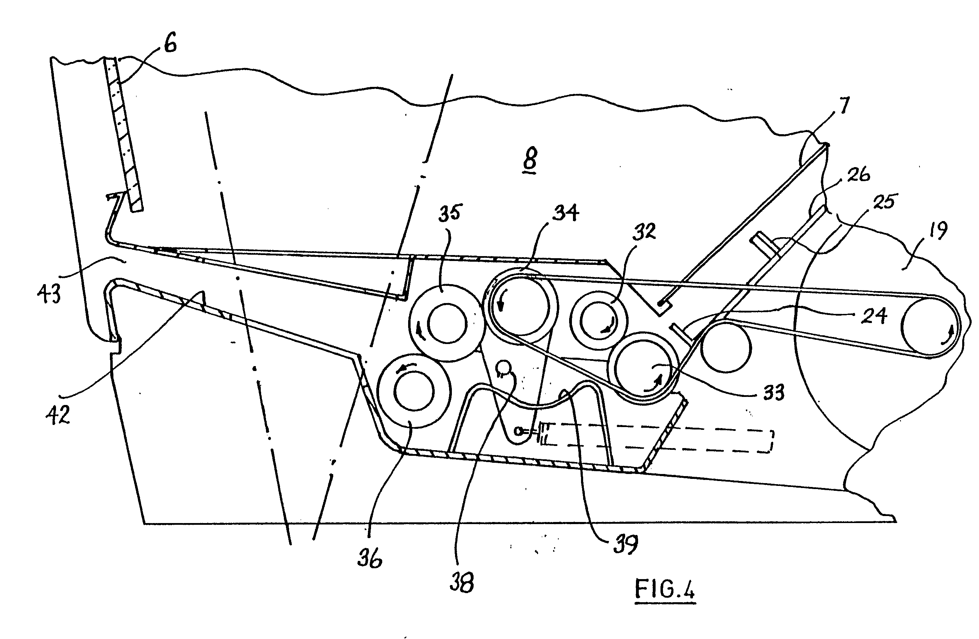

Downstream of the screen 7 is the development station 11 and this comprises five rollers numbered 32—36. The path of the copy sheet through the development station is shown more clearly in Figure 4, the sheet entering the station through the nip between rollers 32 and 33 and leaving the station through the nip between the squeegee rollers 35 and 36. Since roller 32 contacts the copy sheet on the side thereof that supports the charge image, it must be made of appropriate electrically insulating material. The upper squeegee roller 35 is pressed into contact with the lower squeegee roller 36 by a further roller 34. Between the nips of the roller pairs 32, 33 and 35, 36, the copy sheet is made to curve over the upper surface of a shallow trough 39 and below a liquid developer dispensing bar 38. The shallow trough 39 fills with a liquid developer from the bar 38 prior to the approach of the leading edge of a copy sheet. As the sheet passes through the development station the charge image on its upper surface is converted into an image of toner particles by virtue of that upper surface being contacted by developer issuing from the bar 38.

A reservoir for developer liquid is provided at 40 and a bottle 41 supplies fresh liquid developer to the reservoir as this is used up in the development process. A pump and ducting (not shown) are provided to circulate developer from the reservoir 40 to the dispensing bar 38, surplus developer draining back into the reservoir 40 when the pump is operating.

The printed copy sheet, after passing through the nip between the squeegee rollers 35 and 36, enters an outlet passage 42 which terminates in a slot 43 located below the window 5. It will be noted, therefore, that the optical path from the lens system 4 to the mirror 12 passes across the outlet passage 42 and appropriate apertures must be provided in the walls of this passage to permit the light beams to pass therethrough. Although no image can be projected onto the screen 7 when a copy sheet is passing through the outlet passage, 42 this does not represent a disadvantage in practice, since a copy sheet is only in the outlet passage in the final stage of a print sequence.

Figure 5 shows the sequence employed during a print operation, the letters on the lefthand-side of the sequence diagram representing the lamp (L), the solenoid 30 (S), the drive motor 19 (M), the corona unit 20 (C) and the toner pump (TP). The print cycle is divided into three sections, the first representing feed of copy material through the charging station 10 (F), the second, exposure of the charged copy material on the screen 7 (E) and finally, development of the copy sheet in the development station 11 (D). The cam 28 controls the sequences in the F and D sections, in the course of a single 360° rotation.

The period of the print cycle allocated to exposure is variable (it depends upon the intensity of the image projected on the screen 7) and this variability has been indicated by the broken lines in that section of the diagram. It is significant to note that the short period indicated X, between stages E and D, represents a delay between operation of the solenoid (and thus withdrawal of the stop means which is holding the copy sheet away from the nip of the inlet pair of rollers 32 and 33) and the re-energisation of the motor 19, which results in rotation of the rollers 32 and 33. This short delay (which in practice need be no more than approximately one second) ensures that the leading edge of the copy sheet is stationary against the nip when the roller pair commences rotation, thus ensuring that the leading edge is normal to the direction of feed of the copy sheet through the development station.

Although the device employs manual feed of copy sheets from the reservoir 9 into the inlet slit 14, it will be appreciated that the disposition of this reservoir adjacent the upstream end of the charging station 10 makes it a simple matter to modify the design and incorporate automatic paper feed from the upstream end of the reservoir 9 into the downstream end of the charging station 10.

The provision of the coloured sheet material 6 in the window 5 means that it is not necessary to close off the window 5 during exposure of charged material resting on the screen 7. This is because it is possible to select the material 6 so that its transmission wavelength band corresponds to an insensitive region of the charged copy sheet. This is a significant advantage in practice, since it permits a much simpler design of device, there being no need to provide a movable shutter to block out ambient light from the viewing space 8.

The marks 47, adjacent to the slit 14, aid in centring the copy sheet in the slit when it is fed, end first, into the device. If desired, the edges 48 of the slit (which are dimensioned with regard to the width of a sheet fed side first into the slit 14) can be adjustable and can move in symmetrically about the centre line of the slit to ensure accurate feed of end first fed sheets.

Knob 44 control the focus of the lens system 4 and knob 45, the length of the exposure in the print cycle. An on/off switch 46 is also provided.

Although the invention has been described with reference to a front projection type of reader-printer, it is possible to utilise the method of the invention on a rear projection type of device, the copy sheet then being fed in front of the screen and being illuminated from behind.

**Claims**

1. A reader-printer comprising a housing (1) having a screen (7) on which an image of a film is projected, and an electrophotographic print facility (7', 10, 11) within the housing for producing a print on a copy sheet of an image projected on the screen (7) which print facility comprises a charging station (10), an exposure station (7') and a development station (11) with the path for a copy sheet through the housing (1) extending downwardly from the charging station (10) to the exposure station (7') to an inlet (32, 33) of the development station (11) and with first mechanical means (15, 16) for feeding a copy sheet from a copy sheet inlet (14) of the housing (1) through the charging station (10) and second mechanical means (32—36) for feeding a copy sheet from said inlet (32, 33) of the development station (11) characterised in that means (21, 22, 23, 24, 25) is provided to allow a charged copy sheet to drop, under the influence of gravity, (a) from the charging station (10) into the exposure station (7') prior to the formation of the charge image thereon, and (b) from the exposure station (7) to said inlet (32, 33) of the development station (11) after such charge image formation.

2. A front projection reader-printer as claimed in claim 1, characterised in that the screen (7) is formed by a plane surface located within the housing (1) and viewed through a transparent sheet (6) forming a window (5) of the housing and inclined at an angle to the horizontal in the range 45° plus 25° or minus 10°.

3. A reader-printer as claimed in claim 2, characterised in that the exposure position is defined by two sets of stop means (24, 25) provided on the screen (7), a lower stop means (24, 25) provided on the screen (7), a lower stop means (24) which is effective if a rectangular copy sheet is fed through the charging station (10) with the shorter edge thereof leading and a higher stop means (25) effective if the copy sheet is fed through the charging station with the longer edge thereof leading, whereby a copy sheet is automatically arrested at the correct position on the screen (7).

4. A reader-printer as claimed in claim 3, characterised in that the spacing between the rest positions of the leading edge of a copy sheet when resting respectively on the lower (24) and the upper (25) stop means, is substantially one half the difference between the length and the width of the size of copy sheet for which the reader-printer has been designed to operate.

5. A reader-printer as claimed in any preceding claim, characterised in that the inlet to the development station (11) is defined by the nip between a pair of confronting rollers (32, 33) disposed below the lower end of the exposure station and means (28) is provided to allow the leading end of a copy sheet exposed in the exposure station to drop against the upstream side of that nip before rotation of the confronting rollers (32, 33) is commenced.

6. A reader-printer as claimed in any preceding claim, characterised in that a reservoir (9) for copy sheets is located in the upper part of the housing (1), below an openable part (13) of the housing (1) to permit manual removal of a copy sheet from the reservoir (9) when a permanent copy of a projected image is required.

7. A reader-printer as claimed in claim 6, characterised in that the inlet to the charging station comprises a pair of rollers (15, 16), one (15) of which is arranged for manual rotation to feed the leading end of a copy sheet through the said inlet and electrice drive means (19) for a pair of rollers (15, 16), a sheet-actuated switch (18) for the said electric drive being provided downstream of the pair of rollers (15, 16) whereby said electric drive means is energized after an initial manual feed of a copy sheet through the said inlet (14) to complete the copy sheet feed automatically.

8. A reader-printer as claimed in any preceding claim, characterised in that the outlet (43) of the development station (11) is on the front of the housing (1) below the viewing window (5).

9. A method of producing a copy of an image in a microfilm reader-printer which comprises mechanically feeding a sheet through a charging station (10) of the reader-printer to provide a uniform electrostatic charge on the copy sheet and issue the charged sheet out of the station, advancing the uniformly electrostatically charged copy sheet issuing from the charging station into a desired exposure position in an exposure station (7') of the reader-printer prior to exposure therein, exposing said sheet to produce a charge image thereon, after exposure therein displacing said exposed sheet from said exposure position and feeding the exposed copy sheet with a charge image formed thereon from the exposure station (7') to the inlet of a development station (11) of the reader-printer and then mechanically feeding the exposed copy sheet through the development station (11) to convert the charge image into a toner image, characterised in that the charged sheet is released to fall under gravity into the desired exposure position and subsequently released from the exposure position to fall again under gravity to the inlet of the development statio (11).

10. A method as claimed in claim 9, characterised in that the inlet to the development station (11) is defined by the nip between a pair of rollers (32, 33) and the copy sheet dwells at the entrance to that nip, after its gravity feed thereto, prior to rotation of the rollers (32, 33) commencing to further advance the copy sheet through the development station (11).

**Revendications**

1. Visionneuse-tireuse comprenant un boîtier (1) comportant un écran (7) sur lequel une image d'un film est projetée, et un dispositif d'impression électrophotographique (7', 10, 11) dans le boîtier pour produire une épreuve sur une feuille de copie d'une image projetée sur l'écran (7), le dispositif d'impression comprenant un poste de charge (10), un poste d'exposition (7') et une poste de développement (11), le trajet d'une feuille de copie à travers le boîtier (1) s'étendant vers le bas à partir du poste de charge (10) vers le poste d'exposition (7') et vers le bas à partir du poste d'exposition (7') vers une entrée (32, 33) du poste de développement (11), un premier dispositif mécanique (15, 16) étant prévu pour faire avancer une feuille de copie à partir d'une entrée pour feuille de copie (14) du boîtier (1) à travers le poste de charge (10) et un second dispositif mécanique (32, 36) étant prévu pour faire avancer une feuille de copie à partir de l'entrée (32, 33) du poste de développement (11), caractérisée en ce qu'un dispositif (21, 22, 23, 24, 25) est prévu pour permettre à une feuille de copie chargée de tomber, par gravité (a) du poste de charge (10) dans le poste d'exposition (7') avant la formation de l'image de charge sur sa surface, et (b) du poste d'exposition (7) vers l'entrée (32, 33) du poste de développement (11) après la formation de cette image de charge.

2. Visionneuse-tireuse à projection vers l'avant suivant la revendication 1, caractérisée en ce que l'écran (7) est formé par une surface plane prévue dans le boîtier (1) et observée à travers une feuille transparente (6) formant une fenêtre (5) du boîtier et inclinée sous un angle par rapport à l'horizontale compris entre 45° plus 25° ou moins 10°.

3. Visionneuse-tireuse suivant la revendication 2, caractérisée en ce que le poste d'exposition est défini par deux jeux d'arrêts (24, 25) prévus sur l'écran (7), un arrêt inférieur (24) qui intervient si une feuille de copie rectangulaire est avancée à travers le poste de charge (10) de telle sorte que son bord court soit situé en avant et une arrêt supérieur (25) qui intervient si la feuille de copie est avancée à travers le poste de charge d'une manière telle que son bord long soit situé en avant, une feuille de copie étant ainsi arrêtée automatiquement dans la position correcte sur l'écran (7).

4. Visionneuse-tireuse suivant la revendication 3, caractérisée en ce que l'espacement entre les positions de repos du bord antérieur d'une feuille de copie lorsqu'elle repose respectivement sur l'arrêt inférieur (24) et sur l'arrêt supérieur (25), est en substance égal à la moitié de la différence entre la longueur et la largeur de la dimension de la feuille de copie pour laquelle la visionneuse-tireuse a été conçue.

5. Visionneuse-tireuse suivant l'une quelconque des revendications précédentes, caractérisé en ce que l'entrée du poste de développement (11) est définie par l'emprise entre deux rouleaux juxtaposés (32, 33) disposés en dessous de l'extrémité inférieure du poste d'exposition et un dispositif (28) est prévu pour permettre à l'extrémité antérieure d'une feuille de copie exposée dans le poste d'exposition de tomber contre le côté amont de cette emprise avant que les rouleaux juxtaposés (32, 33) aient commencé à tourner.

6. Visionneuse-tireuse suivant l'une quelconque des revendications précédentes, caractérisé en ce qu'un réservoir (9) pour des feuilles de copie est situé dans la partie supérieure du boîtier (1), en dessous d'une partie ouvrable (13) du boîtier (1) pour permettre l'enlèvement manuel d'une feuille de copie du réservoir (9) lorsqu'une copie permanente d'une image projetée est requise.

7. Visionneuse-tireuse suivant la revendication 6, caractérisé en ce que l'entrée du poste de charge comprend deux rouleaux (15, 16) dont l'un (15) peut être entraîné en rotation à la main afin de faire avancer l'extrémité antérieure d'une feuille de copie à travers l'entrée et un dispositif d'entraînement électrique (19) pour les deux rouleaux (15, 16), un interrupteur (18) actionné par la feuille et destiné au dispositif d'entraînement électrique étant prévu en aval des deux rouleaux (15, 16), de sorte que le dispositif d'entraînement électrique est activé après un avancement manuel initial d'une feuille de copie à travers l'entrée (14) afin de terminer automatiquement l'avancement de la feuille de copie.

8. Visionneuse-tireuse suivant l'une quelconque des revendications précédentes, caractérisée ce que la sortie (43) du poste de développement (11) se trouve à l'avant du boîtier (1) en dessous de la fenêtre d'observation (5).

9. Procédé pour produire une copie d'une image dans une visionneuse-tireuse de microfilms, suivant lequel on fait avancer mécaniquement une feuille de copie à travers un poste de charge (10) de la visionneuse-tireuse pour appliquer une charge électrostatique uniforme sur la feuille de copie et sortir le feuille chargée du poste, on fait avancer la feuille de copie chargée électrostatiquement de manière uniforme, qui sort du poste de charge, dans une position d'exposition souhaitée dans un poste d'exposition (7') de la visionneuse-tireuse avant exposition dans ce poste, on expose la feuille en vue de produire une image de charge sur sa surface et après l'exposition, on déplace la feuille exposée de la position d'exposition et on fait avancer la feuille de copie exposée portant une image de charge du poste d'exposition (7') vers l'entrée d'un poste de développement (11) de la visionneuse-tireuse, puis on fait avancer mécaniquement la feuille de copie exposée à travers le poste de développement (11) pour convertir l'image de charge en une image de pigment, caractérisé en ce qu'on libère la feuille chargée de manière qu'elle tombe par gravité dans la position d'exposition voulue et on la libère ensuite de la position d'exposition de manière qu'elle tombe à nouveau par gravité dans l'entrée du poste de développement (11).

10. Procédé suivant la revendication 9, caractérisé en ce que l'entrée du poste de développement (11) est définie par l'emprise entre deux rouleaux (32, 33) et la feuille de copie d'immobilise à l'entrée de cette emprise, après y avoir été introduite par gravité, avant que la rotation des rouleaux (32, 33) commence à faire avancer la feuille de copie davantage à travers le poste de développement (11).

**Patentansprüche**

1. Kopier- und Lesegerät, bestehend aus einem Gehäuse (1) mit einem Schirm (7), auf den eine Abbildung eines Films projiziert wird, und einer elektrophotographischen Kopiereinrichtung (7', 10, 11) im Gehäuse zur Herstellung einer Kopie einer auf den Schirm (7) projizierten Abbildung auf einem Kopierbogen, wobei die Kopiereinrichtung eine Aufladestation (10), eine Belichtungsstation (7') und eine Entwicklungsstation (11), wobei der Weg eines Kopierbogens durch das Gehäuse (1) von der Aufladestation (10) abwärts zur Belichtungsstation (7') und abwärts von dieser zu einem Einlass (32, 33) der Entwicklungsstation (11) verläuft, sowie erste mechanische Mittel (15, 16) zum Vorschub eines Kopierbogens von einem Kopierbogeneinlass (14) im Gehäuse (1) durch die Aufladestation (10) und zweite mechanische Mittel (32—36) zum Vorschub eines Kopierbogens von diesem Einlass (32, 33) der Entwicklungsstation (11) umfasst, dadurch gekennzeichnet, dass Mittel (21, 22, 23, 24, 25) vorgesehen sind, die einen geladenen Kopierbogen unter Schwerkraft (a) von der Aufladestation (10) in die Belichtungsstation (7') vor der Bildung des Ladungsbilds darauf und (b) von der Belichtungsstation (7) zu jenem Einlass (32, 33) der Entwicklungsstation (11) nach der Bildung eines solchen Ladungsbilds fallen lassen.

2. Kopier- und Lesegerät mit Frontalprojektion nach Anspruch 1, dadurch gekennzeichnet, dass der Schirm (7) von einer ebenen Fläche gebildet wird, die im Gehäuse (1) angeordnet ist, durch eine transparente, ein Fenster (5) im Gehäuse bildende Folie (6) betrachtet wird und unter einem Winkel zur Horizontalen im Bereich von 45° plus 25° oder minus 10° geneigt ist.

3. Kopier-und Lesegerät nach Anspruch 2, dadurch gekennzeichnet, dass die Belichtungsstellung durch zwei Sätze von auf dem Schirm (7) vorgesehenen Anschlägen (24, 25) begrenzt ist, wobei ein unterer Anschlag (24) wirksam wird, wenn ein rechteckiger Kopierbogen mit der kürzeren Kante zuvorderst durch die Aufladestation (10) vorgeschoben wird, und eine oberer Anschlag (25) wirksam wird, wenn der Kopierbogen mit der längeren Kante zuvorderst durch die Aufladestation vorgeschoben wird, wodurch ein Kopierbogen automatisch in der richtigen Stellung auf dem Schirm (7) angehalten wird.

4. Kopier- und Lesegerät nach Anspruch 3, dadurch gekennzeichnet, dass der Abstand zwischen den Ruhestellungen der Vorderkante eines Kopierbogens bei Auflage auf dem unteren (24) bzw. oberen (25) Anschlag im wesentlichen dem halben Unterschied zwischen der Länge und der Breite des Kopierbogenformats entspricht, für dessen Betrieb das Kopier- und Lesegerät ausgelegt ist.

5. Kopier- und Lesegerät nach einem der vorhergehenden Ansprüche, dadurch gekennzeichnet, dass der Einlass zur Entwicklungsstation (11) durch den Spalt zwischen einem Paar gegenüberliegender, unter dem unteren Ende der Belichtungsstation angeordneter Walzen (32, 33) begrenzt wird und Mittel (28) vorgesehen sind, die das Vorderende eines in der Belichtungsstation belichteten Kopierbogens vor die stromaufwärtige Seite dieses Spalts fallen lassen, bevor die gegenüberliegenden Walzen (32, 33) sich zu drehen beginnen.

6. Kopier- und Lesegerät nach einem der vorhergehenden Ansprüche, dadurch gekennzeichnet, dass ein Kopierbogenvorratsbehälter (9) im oberen Teil des Gehäuses (1) unter einem Teil (13) davon, der sich öffnen lässt, angeordnet ist, um die manuelle Entnahme eines Kopierbogens aus dem Vorratsbehälter (9) zu ermöglichen, wenn eine dauerhafte Kopie einer projizierten Abbildung benötigt wird.

7. Kopier- und Lesegerät nach Anspruch 6, dadurch gekennzeichnet, dass der Einlass zur Aufladestation aus einem Walzenpaar (15, 16), von denen die eine (15) von Hand gedreht werden kann, um die Vorderkante eines Kopierbogens durch diesen Einlass vorzuschieben, und einer elektrischen Antriebsvorrichtung (19) für das Walzenpaar (15, 16) besteht, wobei eine vom Bogen betätigter Schalter (18) für diesen elektrischen Antrieb stromabwärts von dem Walzenpaar (15, 16) vorgesehen ist, wodurch nach anfänglichem manuellen Vorschub eines Kopierbogens durch jenen Einlass (14) diese elektrische Antriebsvorrichtung erregt wird, um den Vorschub des Kopierbogens automatisch zu Ende zu führen.

8. Kopier- und Lesegerät nach einem der vorhergehenden Ansprüche, dadurch gekennzeichnet, dass der Auslass (43) der Entwicklungstation (11) auf der Vorderseite des Gehäuses (1) unter dem Sichtfenster (5) liegt.

9. Verfahren zur Herstellung einer Kopie einer Abbildung in einem Mikrofilmkopier- und -lesegerät, wobei ein Kopierbogen mechanisch durch eine Aufladestation (10) des Kopier- und Lesegeräts vorgeschoben wird, um den Kopierbogen mit einer gleichförmigen elektrostatischen Aufladung zu versehen und den geladenen Bogen aus der Station austreten zu lassen, der aus der Aufladestation austretende, gleichförmig elektrostatisch aufgeladene Kopierbogen in eine gewünschte Belichtungsstellung in einer Belichtungsstation (7') des Kopier- und Lesegeräts vor der Belichtung darin vorgerückt wird, dieser Bogen zur Erzeugung eines Ladungsbilds darauf belichtet wird, dieser belichtete Bogen nach der Belichtung darin aus dieser Belichtungsstellung verschoben und der belichtete Kopierbogen mit einem darauf gebildeten Ladungsbild von der Belichtungstation (7') dem Einlass einer Entwicklungsstation (11) des Kopier- und Lesegeräts zugeführt und dann mechanisch durch die Entwicklungsstation (11) hindurchgeführt wird, um das Ladungsbild in ein Tonerbild zu überführen, dadurch gekennzeichnet, dass der aufgeladene Bogen zum Fallen unter Schwerkraft in die gewünschte Belichtungsstellung freigegeben und nachter wiederum zum Fallen unter Schwerkraft aus der Belichtungsstellung in den Einlass der Entwicklungstation (11) freigegeben wird.

10. Verfahren nach Anspruch 9, dadurch gekennzeichnet, dass der Einlass zur Entwicklungstation (11) durch den Spalt zwischen einem Walzenpaar (32, 33) begrenzt wird und der Kopierbogen am Eingang zu diesem Spalt verweilt, nachdem et unter Schwerkraft dorthin gelangt ist, bevor die Drehung der Walzen (32, 33) zum weitern Vorschub des Kopierbogens durch die Entwicklungsstation (11) beginnt.

FIG.1

FIG.2

PRINT

FIG.5

FIG.3

FIG.4

0 035 410